# EUROPEAN PATENT APPLICATION

(11) **EP 4 307 134 A1**
(43) Date of publication of application: **17.01.2024**
(21) Application number: 22198560.9
(22) Date of filing: 29.09.2022
(51) Int. Cl.: G06F 16/18

(54) **PLATFORM DETECTION ALGORITHM FOR FORENSIC IMAGES**

(30) Priority: 11.07.2022 US 202263388070 P
(71) Applicant: Magnet Forensics Inc., Waterloo, ON N2K 0A8 (CA)
(72) Inventor: SALIBA, Jad John, Waterloo N2K 0A8, N2K 0A8 (CA); MCILVEEN, Samantha, Waterloo, N2K OA8 (CA); CUNNEY, Kieran, Waterloo, N2K OA8 (CA); GUGLIELMI, Emily, Waterloo, N2K OA8 (CA); CORTEZ MARTINEZ, Mariel, Waterloo, N2K OA8 (CA); RANDALL, Garrett, Waterloo, N2K OA8 (CA)
(74) Representative: Humphrey-Evans, Edward John

(57) **Abstract**

Provided is a computer system and method for determining a platform type of a forensic image. The method includes storing in a memory a mapping data structure mapping at least one predetermined data marker type to at least one platform type and automatically determining the platform type by scanning the forensic image for the at least one predetermined data marker type. The method further includes, where at least one data marker is detected, mapping the at least one data marker to the at least one platform type using the mapping data structure and assigning the at least one platform type as a determined platform type. The method further includes, where at least one data marker is not detected, examining the forensic image to identify a set of present data elements, determining, according to at least one encoded rule, a most likely platform type, and assigning the most likely platform type as the determined platform type.

## Description

### Technical Field

The following relates generally to digital forensics, and more particularly to systems and methods for processing forensic images in digital forensics investigations.

### Introduction

Preliminary steps in a digital forensic investigation often include acquiring a forensic image of one or more electronic devices ("target device") that may store electronic information or data that is of value to the forensic investigation ("forensic data" or "digital evidence"). A forensic image may be considered a comprehensive duplicate of electronically stored information or electronic media such as a hard disk drive or copy of unaltered electronically stored information that provides a forensically valid form of the electronically stored information from the imaged target device that can be further processed and investigated off the target device.

A forensic image, once acquired, can be processed using various software tools and forensic investigation techniques to extract forensically relevant data (e.g. data artifacts). The data artifacts and other forensically relevant data can be investigated and further analyzed using manual or automatic techniques to assess relevance and advance the investigation.

The target devices from which forensic images are acquired may have different operating systems (or "platforms"). Software tools for processing forensic images are often specific for the platform of the target device from which the forensic image was acquired ("platform-specific"). Effective forensic investigation of the forensic image may thus require the platform of the target device to be identified prior to investigating or processing the forensic image so that the proper software tools can be applied.

Using existing techniques, to start any digital forensic investigation, a user needs to either have previous knowledge of the forensically imaged target device or manually analyze the contents of the forensic image to determine the structure of data so that the correct forensic investigation techniques could be applied, or tools configured.

Such existing techniques can be time consuming and may require a high level of domain expertise.

The present invention seeks to provide an improved system and method for automatically detecting a platform or operating system of a forensic image for further platform-specific forensic processing of the forensic image that overcomes at least some of the disadvantages of existing systems and methods.

### Summary

Provided is a computer system for determining a platform type of a forensic image. The computer system includes a memory comprising at least one storage device and a processor configured to store in the memory a mapping data structure including a mapping of at least one predetermined data marker type to at least one platform type and automatically determine the platform type of the forensic image. Automatically determining the platform type includes scanning at least a part of the forensic image for the at least one predetermined data marker type. Where at least one data marker of the at least one predetermined data marker type is detected during the scan, the automatically determining the platform type includes mapping the at least one data marker of the at least one predetermined data marker type to the at least one platform type using the mapping data structure and assigning the at least one platform type as a determined platform type for the forensic image. Where at least one data marker of the at least one predetermined data marker type is not detected during the scan, the automatically determining the platform type includes: examining at least a part of the forensic image for a set of predetermined data element types to identify a set of present data elements; determining, according to at least one encoded rule stored in the memory, a most likely platform type using the set of present data elements identified during the examining; and assigning the most likely platform type as the determined platform type for the forensic image.

The at least one predetermined data marker type may include a first data marker type and second data marker type.

The processor may be further configured to generate a user interface displaying the determined platform type. The processor may be further configured to store in the memory a second mapping data structure including a mapping of the determined platform type to at least one forensic image processing tool and map the determined platform type to the at least one forensic image processing tool using the second mapping data structure. The at least one forensic image processing tool may be configured to extract at least one data artifact type supported by the determined platform type, from the forensic image.

The processor may be further configured to generate a user interface displaying at least one of: a data artifact extracted from the forensic image by the at least one forensic image processing tool, metadata of the data artifact, and a forensic analysis output generated from the data item.

The processor may be further configured to generate a user interface displaying identifying information about the at least one forensic image processing tool. The processor may be further configured to receive, via the user interface, input data from a user to execute the at least one forensic image processing tool to process the forensic image and execute the at least one forensic image processing tool in response to receiving the input data to process the forensic image.

The processor may be further configured, in response to mapping the determined platform type to the at least one forensic image processing tool, to automatically execute the at least one forensic image processing tool to process the forensic image. The at least one platform type may be one or more of Microsoft Windows, Apple MacOs, Linux, Unix, iOS and Andriod OS.

The at least one predetermined data marker type may be one or more of a file naming pattern type, an encryption type, a file system type, and a type of file system structure metadata of the forensic image. The scanning may include scanning a file name of the forensic image for the at least one predetermined data marker type. The scanning may further include scanning header bytes of the forensic image for the at least one predetermined data marker type.

The scanning may include scanning a file name of at least one file in the forensic image for the at least one predetermined data marker type. The scanning may include scanning file content of at least one file in the forensic image for the at least one predetermined data marker type. The at least one marker type may include a first marker type and a second marker type, and the scanning for the second marker type may only be executed if the first marker type is not detected by the scan for the first marker type.

A first processing power may be less than a second processing power, wherein the first processing power is a processing power of the processor required to scan for the first marker type when the first marker type is not detected, and the second processing power is a processing power of the processor required to scan for the second marker type when the second marker type is not detected. The scanning for the first marker type may be to a depth less than the scanning for the second marker, wherein the depth is a number of directory levels or part thereof that the scanning traverses.

A first time period may be less than a second time period, wherein the first time period is an amount of time required for the processor to scan for the first marker type when the first marker type is not detected, and the second time period is an amount of time required for the processor to scan for the second marker type when the second marker type is not detected. The scanning for the first marker type may be performed without opening a directory structure of the forensic image.

The processor may be further configured to store in the memory a heuristic determination data structure including a mapping of at least one predetermined element type to at least one platform type. The identified set of present elements may comprise a first element and a second element. The determining, according to the at least one encoded rule, may include: mapping the first element to a first platform type and the second element to a second platform type according to the heuristic determination data structure; and selecting a determined platform from the first platform type and the second platform type may be based on the at least one encoded rule. The encoded rule may comprise a voting system based on how frequently a platform type is represented in the set of present data elements. The voting system may further include applying a weighting factor based on or attributed to at least one identified element in the set of present data elements.

The examining may include traversing a depth of a directory structure of the forensic image up to a depth threshold, wherein the depth is a measure of a number of directory levels or part thereof of the directory structure that the examining has traversed.

The determining, according to the at least one encoded rule stored in the memory, the most likely platform type using the set of present data elements identified during the examining may further include: determining a candidate most likely platform type based on the set of present data elements; determining a confidence level associated with the determination of the current platform type; comparing the confidence level to a confidence level threshold; and where the confidence level meets the confidence level threshold, assigning the candidate most likely platform as the most likely platform type and terminating the examining of the forensic image.

The examining may be terminated if an amount of processing power used by the processor in determining the most likely platform type exceeds a processing power level threshold, and the most likely platform may be determined from the set of present data elements identified as of the termination of the examining. The examining may be terminated if an amount of processing time used by the processor in determining the most likely platform type exceeds a processing time threshold, and the most likely platform may be determined from the set of present data elements identified as of the termination of the examining.

Automatically determining the platform type may be performed for each of a plurality of partitions of the forensic image to determine a partition platform type for each of the plurality of partitions.

The processor may be further configured to generate a user interface displaying the determined partition platform types of the plurality of partitions.

The processor may be further configured to store in the memory at least one predetermined rule for selecting the determined platform type from the determined partition platform types of the plurality of partitions to assign as the determined platform type for the forensic image, select a first of the determined partition platform types as the determined platform type according to the at least one predetermined rule, and assign the first of the determined partition platform types as the determined platform type of the forensic image. The plurality of partitions may be ordered in a partition order including a first partition, and the at least one predetermined rule may comprise selecting the platform type of the first partition.

The at least one predetermined rule may comprise selecting the platform type based on a largest partition, an earliest created partition, a last modified partition, a last accessed partition, or a first alphabetically listed partition of the forensic image. The at least one predetermined rule may comprise selecting a platform type most frequently represented in the determined partition platform types. The selecting the first of the determined partition platform types as the selected determined platform type according to the at least one predetermined rule may comprise: applying a weighting factor to the determined partition platform types to obtain weighted determined partition platform types; and selecting the first of the determined partition platform types from the weighted determined partition platform types.

The processor may be further configured to: store in the memory a mapping data structure including a mapping of the determined platform type to a digital forensic investigation workflow stored in the memory, the digital forensic investigation workflow including a plurality of operations to be performed on the forensic image or data extracted from the forensic image; map the determined platform type to the digital forensic investigation workflow; and execute at least a portion of the digital forensic investigation workflow. The execution of the at least a portion of the digital forensic workflow may be initiated automatically and without user input.

Provided is a computer-implemented method of determining a platform type of a forensic image, the method includes storing, in a memory comprising at least one storage device, a mapping data structure including a mapping of at least one predetermined data marker type to at least one platform type and automatically determining, using a processor, the platform type of the forensic image. The automatically determining, using a processor, the platform type of the forensic image includes scanning at least a part of the forensic image for the at least one predetermined data marker type. Where at least one data marker of the at least one predetermined data marker type is detected during the scan the automatically determining includes determining a platform type by mapping the at least one data marker of the at least one predetermined data marker type to the at least one platform type using the mapping data structure and assigning the at least one platform type as a determined platform type for the forensic image. Where at least one data marker of the at least one predetermined data marker type is not detected during the scan the automatically determining includes examining at least a part of the forensic image for a set of predetermined data element types to identify a set of present data elements determining, according to at least one encoded rule stored in the memory, a most likely platform type using the set of present data elements identified during the examining, and assigning the most likely platform type as the determined platform type for the forensic image.

The at least one predetermined data marker type may include a first data marker type and second data marker type.

The method may further include generating a user interface displaying the determined platform type. The method may further include storing in the memory a second mapping data structure including a mapping of the determined platform type to at least one forensic image processing tool and map the determined platform type to the at least one forensic image processing tool using the mapping data structure. The at least one forensic image processing tool may be configured to extract at least one data artifact type supported by the determined platform type, from the forensic image.

The method may further include generating a user interface displaying at least one of: a data artifact extracted from the forensic image by the at least one forensic image processing tool, metadata of the data artifact, and a forensic analysis output generated from the data item. The method may further include generating a user interface displaying identifying information about the at least one forensic image processing tool.

The method may further include receiving, via the user interface, input data from a user to execute the at least one forensic image processing tool to process the forensic image and execute the at least one forensic image processing tool in response to receiving the input data to process the forensic image.

The method may further include, in response to mapping the determined platform type to the at least one forensic image processing tool, automatically executing the at least one forensic image processing tool to process the forensic image. The at least one platform type may be one or more of Microsoft Windows, Apple MacOs, Linux, Unix, iOS and Andriod OS.

The at least one predetermined data marker type may be one or more of a file naming pattern type, an encryption type, a file system type, and a type of file system structure metadata of the forensic image. The scanning may include scanning a file name of the forensic image for the at least one predetermined data marker type. The scanning may further include scanning header bytes of the forensic image for the at least one predetermined data marker type. The scanning may include scanning a file name of at least one file in the forensic image for the at least one predetermined data marker type. The scanning may include scanning file content of at least one file in the forensic image for the at least one predetermined data marker type.

The at least one marker type may include a first marker type and a second marker type, and the scanning for the second marker type may only be executed if the first marker type is not detected by the scan for the first marker type.

A first processing power may be less than a second processing power, wherein the first processing power is a processing power of the processor required to scan for the first marker type when the first marker type is not detected, and the second processing power is a processing power of the processor required to scan for the second marker type when the second marker type is not detected.

The scanning for the first marker type may be to a depth less than the scanning for the second marker, wherein the depth is a number of directory levels or part thereof that the scanning traverses.

A first time period may be less than a second time period, wherein the first time period is an amount of time required for the processor to scan for the first marker type when the first marker type is not detected, and the second time period is an amount of time required for the processor to scan for the second marker type when the second marker type is not detected.

The scanning for the first marker type may be performed without opening a directory structure of the forensic image.

The method may further include storing in the memory a heuristic determination data structure including a mapping of at least one predetermined element type to at least one platform type. The identified set of present elements may comprise a first element and a second element. The determining, according to the at least one encoded rule, may include: mapping the first element to a first platform type and the second element to a second platform type according to the heuristic determination data structure; and selecting a determined platform from the first platform type and the second platform type may be based on the at least one encoded rule.

The encoded rule may comprise a voting system based on how frequently a platform type is represented in the set of present data elements. The voting system may further include applying a weighting factor based on or attributed to at least one identified element in the set of present data elements.

The examining may include traversing a depth of a directory structure of the forensic image up to a depth threshold, wherein the depth is a measure of a number of directory levels or part thereof of the directory structure that the examining has traversed.

The determining, according to the at least one encoded rule stored in the memory, the most likely platform type using the set of present data elements identified during the examining may further include: determining a candidate most likely platform type based on the set of present data elements; determining a confidence level associated with the determination of the current platform type; comparing the confidence level to a confidence level threshold; and where the confidence level meets the confidence level threshold, assigning the candidate most likely platform as the most likely platform type and terminating the examining of the forensic image.

The examining may be terminated if an amount of processing power used by the processor in determining the most likely platform type exceeds a processing power level threshold, and the most likely platform may be determined from the set of present data elements identified as of the termination of the examining. The examining may be terminated if an amount of processing time used by the processor in determining the most likely platform type exceeds a processing time threshold, and the most likely platform may be determined from the set of present data elements identified as of the termination of the examining.

Automatically determining the platform type may be performed for each of a plurality of partitions of the forensic image to determine a partition platform type for each of the plurality of partitions. The method may further include generating a user interface displaying the determined partition platform types of the plurality of partitions.

The method may further include storing in the memory at least one predetermined rule for selecting the determined platform type from the determined partition platform types of the plurality of partitions to assign as the determined platform type for the forensic image, select a first of the determined partition platform types as the determined platform type according to the at least one predetermined rule, and assign the first of the determined partition platform types as the determined platform type of the forensic image.

The plurality of partitions may be ordered in a partition order including a first partition, and the at least one predetermined rule may comprise selecting the platform type of the first partition. The at least one predetermined rule may comprise selecting the platform type based on a largest partition, an earliest created partition, a last modified partition, a last accessed partition, or a first alphabetically listed partition of the forensic image. The at least one predetermined rule may comprise selecting a platform type most frequently represented in the determined partition platform types.

The selecting the first of the determined partition platform types as the selected determined platform type according to the at least one predetermined rule may comprise: applying a weighting factor to the determined partition platform types to obtain weighted determined partition platform types; and selecting the first of the determined partition platform types from the weighted determined partition platform types.

The method may further include: storing in the memory a mapping data structure including a mapping of the determined platform type to a digital forensic investigation workflow stored in the memory, the digital forensic investigation workflow including a plurality of operations to be performed on the forensic image or data extracted from the forensic image; mapping the determined platform type to the digital forensic investigation workflow; and executing at least a portion of the digital forensic investigation workflow. The execution of the at least a portion of the digital forensic workflow may be initiated automatically and without user input.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a computer system for determining a platform or operating system of a forensic image, according to an embodiment;
Figure 2 is a flow diagram of a method of forensically investigating a target device including automatically detecting a platform type of the target device, according to an embodiment;
Figure 3 is a block diagram of a computer system for digital forensic investigation including automated platform detection, according to an embodiment;
Figure 4 is a block diagram of the file naming pattern mapping data structure of Figure 3, according to an embodiment;
Figure 5 is a block diagram of the platform specific processing tool mapping data structure of Figure 3, according to an embodiment;
Figure 6 is a block diagram of the encryption type mapping data structure of Figure 3, according to an embodiment;
Figure 7 is a block diagram of the file system type mapping data structure of Figure 3, according to an embodiment;
Figure 8 is a block diagram of the file system structure metadata mapping data structure of Figure 3, according to an embodiment;
Figure 9 is a block diagram of the heuristic determination data structure of Figure 3, according to an embodiment;
Figure 10 is a flow diagram of a method of determining a platform of a target device from a forensic image of the target device based on a file naming pattern of the forensic image, according to an embodiment;
Figure 11 is a flow diagram of a method of determining a platform of a target device from a forensic image of the target device based on an encryption type of the forensic image, according to an embodiment;
Figure 12 is a flow diagram of a method of determining a platform of a target device from a forensic image of the target device based on a file system type of the forensic image, according to an embodiment;
Figure 13 is a flow diagram of the method of determining a platform of a target device from a forensic image of the target device based on a file metadata structure of the forensic image, according to an embodiment;
Figure 14 is a flow diagram of a method of heuristically determining a platform of a target device from a forensic image of the target device based on elements present on the forensic image, according to an embodiment; and
Figure 15 is a flow diagram of a method of processing a forensic image including determining a platform type of the forensic image, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/orstorage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to digital forensics, and more particularly to systems and methods for processing forensic images in digital forensics investigations.

The systems, methods, and devices of the present disclosure enable automatic detection of a platform or operating system of a target device through processing a forensic image of the target device. An output of the detection operation can be used to automatically action on the forensic image. Such action may include, for example, execution of one or more platform-specific processing tools to extract data artifacts and other potentially forensically relevant data from the forensic image. For example, in some cases, digital forensics systems may process forensic data according to pre-defined workflows that implement one or more platform-specific processing tools. By detecting the platform of the forensic image without requiring previous knowledge of the forensic image or manual pre-analysis of its contents, the systems, methods, and devices of the present disclosure can increase automation of digital forensic investigations, such as by automatically actioning on the forensic data via one or more forensic processing tools or digital forensic workflows, thereby enhancing their efficiency and enabling less-experienced users to perform digital forensic investigations.

As used herein, "platform" refers to an operating system used by the original device that was forensically imaged. Examples include Windows, Linux, Mac, iOS, and Android. It is often necessary when doing forensic investigations to have this information because, depending on the platform, different evidence can be targeted to search for, different analysis tools can be used to extract and locate different types of evidence, etc.

The systems and methods of the present disclosure may advantageously remove the need for previous knowledge of the target device or manual analysis. A platform detection tool also mitigates the need to determine and/or document the platform type of the forensic image when the forensic image is obtained. A platform detection tool may also serve as a backup if previous knowledge is not available, and as a check when previous knowledge is available, by providing upfront notification before a platform-specific workflow or tool is run that will likely error out if the workflow or tool is not platform-specific to the detected platform. A platform detection tool may also auto-populate the detected platform for watch folders and API workflows. A platform detection tool may also reduce the processing power necessary to process the forensic image. The reduction may be achieved by narrowing the tool set used to process the forensic image. The reduction may also be achieved by reducing the number of workflows in processing a forensic image. The reduction may also be achieved by enabling and/or automating the configuration tools and workflows in a manner that processes the forensic image more efficiently than without such a configuration. A platform detection tool may also enable the detection of the platform to be perform at a time where processing power is not being used, such as down time between retrieval of the forensic image and processing the forensic image.

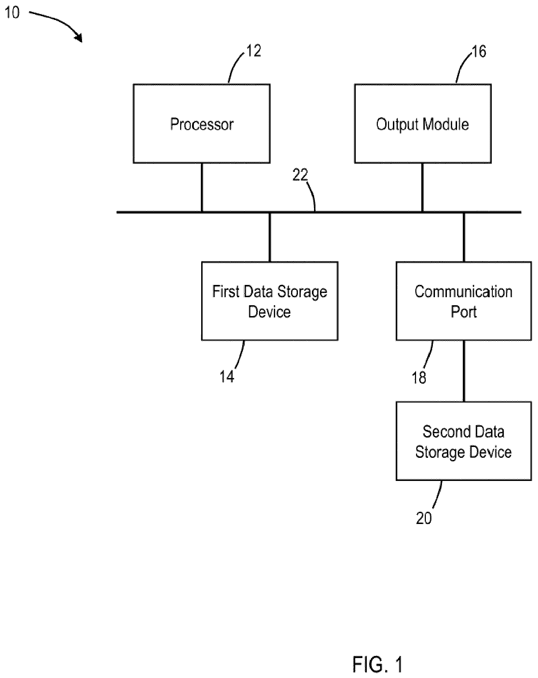

Referring now to Figure 1, shown therein is a system 10 for determining a platform or operating system of a forensic image, according to an embodiment. The system 10 includes a processor 12, a first data storage device 14, an output module 16, a communication port 18 and a second data storage device 20 coupled to the communication port 20. In this embodiment, the various components 12, 14, 16, 18 of the system 10 are operatively coupled using a system bus 22. The system 10 may be various electronic devices such as personal computers, networked computers, portable computers, portable electronic devices, personal digital assistants, laptops, desktops, mobile phones, smart phones, tablets, and so on.

In some examples, the first data storage device 14 may be a hard disk drive, a solid-state drive, or any other form of suitable data storage device and/or memory that may be used in various electronic devices. The data storage device 14 may have various data stored thereon. Generally, the data stored on the data storage device 14 includes data that may be of forensic value to a digital forensic investigation and from which a forensic image can be generated and acquired for investigation.

In the embodiment as shown, another data storage device in addition to the first data storage device 14, namely the second data storage device 20, is provided. The second data storage device 20 may be used to store computer-executable instructions that can be executed by the processor 12 to configure the processor 12 to determine a platform or operating system of a forensic image stored in the data storage device 14 or of a forensic image acquired from the first data storage device 14 and stored in the second data storage device 20. It should be noted that it is not necessary to provide a second data storage device, and in other embodiments, the instructions may be stored in the first data storage device 14 or any other data storage device.

In some cases, the first data storage device 14 may be a data storage device external to the system 10 or processor 12. For example, the first data storage device 14 may be a data storage component of an external computing device (e.g. a mobile phone or a laptop computer) that is being forensically investigated. Such device may be referred to as a "target device". In such cases, the processor 12 may be configured to execute computer-executable instructions (stored in second data storage device 20) to acquire a forensic image of the first data storage device 14 and store the forensic image in the second data storage device 20. The processor 12 may be configured to provide a user interface to the output module 16. The output module 16, for example, may be a suitable display device (e.g. a monitor) coupled to the processor 12. The user interface allows the processor 12 to solicit input from a user regarding various types of operations to be performed by the processor 12. The user interface also allows for the display of various output data and determinations, such as a determination of a detected platform of a forensic image, generated by the processor 12.

The system 10 may be a purpose-built machine designed specifically for conducting a digital forensic investigation including automatically determining a platform type of a forensic image. The system 10 may be a server computer, desktop computer, notebook computer, tablet, PDA, smartphone, or another computing device. The system 10 may include a connection with a network such as a wired or wireless connection to the Internet. In some cases, the network may include other types of computer or telecommunication networks. The system 10 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor 12 may execute applications, computer readable instructions or programs. The applications, computer readable instructions or programs may be stored in memory or in secondary storage or may be received from the Internet or other network. Input device may include any device for entering information into system 10. For example, input device may be a keyboard, keypad, cursor-control device, touchscreen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, system 10 may include multiple of any one or more of processors, applications, software modules, second storage devices, network connections, input devices, output devices, and display devices.

Although system 10 is described with various components, one skilled in the art will appreciate that the system 10 may in some cases contain fewer, additional or different components. In addition, although aspects of an implementation of the system 10 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the system 10 and/or processor 12 to perform a particular method.

In the description that follows, devices such as system 10 are described performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood.

As an example, a user using the system 10 may manipulate one or more input devices (not shown; e.g. a mouse and a keyboard) to interact with a user interface displayed on a display of the system 10. In some cases, the system 10 may generate and/or receive a user interface from the network (e.g. in the form of a webpage). Alternatively, or in addition, a user interface may be stored locally at a device (e.g. a cache of a webpage or a mobile application). In response to receiving information, the system 10 may store the information in storage database. The storage may correspond with secondary storage of the system 10. Generally, the storage database may be any suitable storage device such as a hard disk drive, a solid state drive, a memory card, or a disk (e.g. CD, DVD, or Blu-ray etc.). Also, the storage database may be locally connected with the system 10. In some cases, storage database may be located remotely from system 10 and accessible to system 10 across a network for example. In some cases, storage database may comprise one or more storage devices located at a networked cloud storage provider.

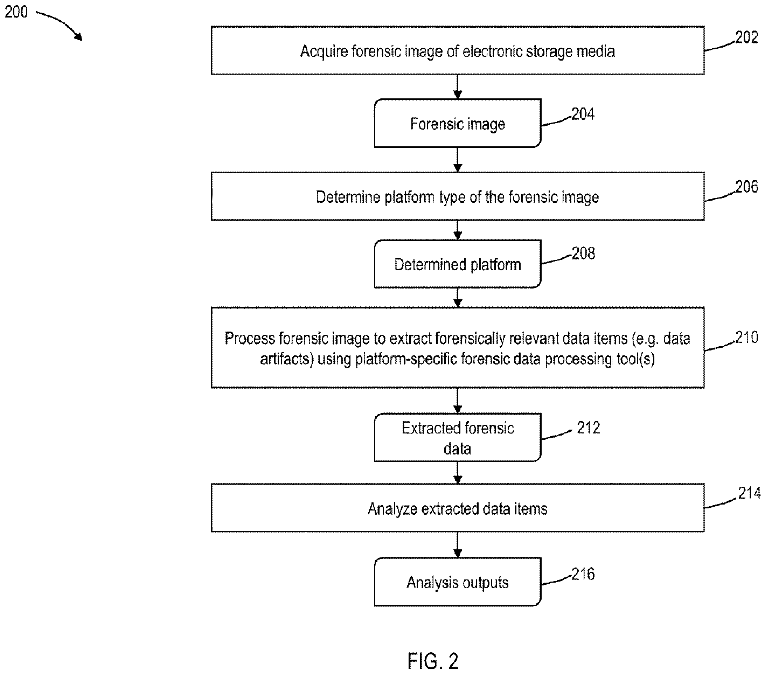

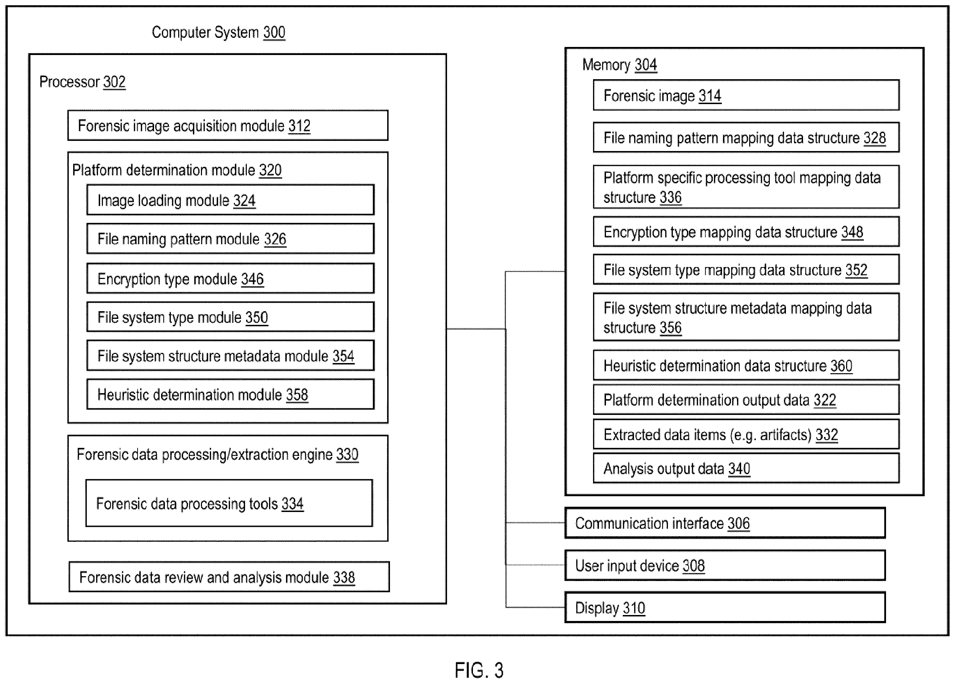

Referring now to Figure 2, shown therein is a flow diagram of a method 200 of forensically investigating a target device including automatic determination of a platform of the target device, according to an embodiment. The method 200, or portions thereof, may be implemented by the computer systems described herein, such as system 10 of Figure 1. In particular, the method 200 may be encoded as computer-executable instructions in the processor 302 of Figure 3, described below.

At 202, a forensic image 204 of one or more of an electronic storage media, a target dataset, and a target device is acquired. The forensic image may include at least one partition. Each partition may include at least one partition platform. The partition platform may be of a partition platform type. It may be beneficial to investigating the target device to know a platform type 208 of the forensic image based on the partition platform type. The platform type 208 may be an operating system (OS) type. In an example, the partition platform type or platform type may be one or more of Microsoft Windows, Apple MacOs, Linux, Unix, iOS and Andriod OS.

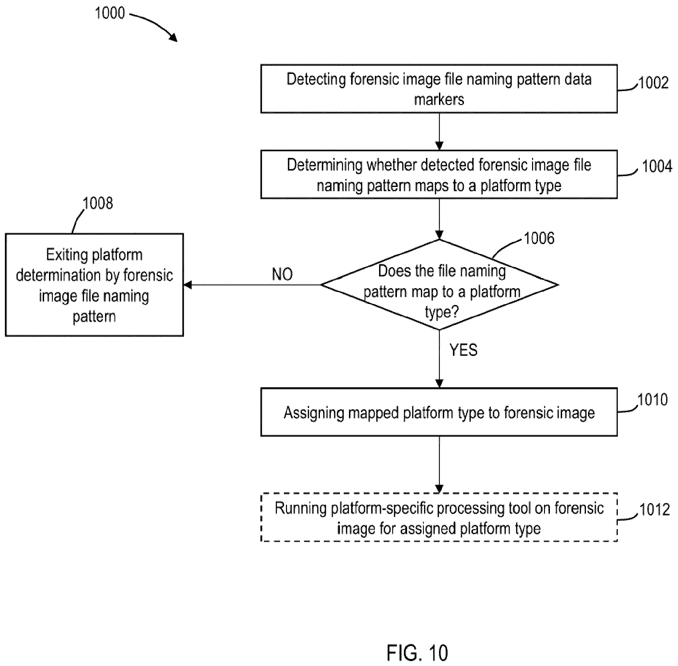

At 206, the platform type is determined from the forensic image. The platform type may be determined, for example, by any one or more of the methods 1000, 1100, 1200, 1300, 1400, and 1500 of Figures 10-16, respectively, described herein.

At 210, the forensic image is processed based on the determined platform type. The processing may include using at least one platform-specific forensic data processing tool based on the determined platform. The processing may extract forensically relevant data items 212. The forensically relevant data items 212 may be data artifacts.

At 214, the extracted forensic data items 212 are analyzed. The analysis may produce analysis outputs 216. Analysis outputs may include, for example, visualizations of extracted forensic data items 212 that can be rendered and displayed in a user interface. Such visualizations may, for example, illustrate connections between extracted forensic data items 212.

Referring now to Figure 3 shown therein is a computer system 300 for determining a platform or operating system of a target device from a forensic image of the target device, according to an embodiment. The computer system 300 may be the system 10 of Figure 1. The computer system 300 may be configured to implement the method 200 of Figure 2. Aspects of the computer system 300 (e.g. memory, processor, modules/engines, stored data, etc.) may be implemented at a single computing device or across a plurality of computing devices. The system 300 includes a processor 302. The processor 302 is configured to determine the platform type of the target device based on the forensic image and process the forensic image based on the determined platform type.

The system further includes memory 304. The memory 304 is communicatively connected to the processor 302. The memory 304 stores computer-executable instructions which, when executed by the processor 302, cause the computer system 300 to perform the functions and provide the functionalities described herein, such as performing automated determination of a platform type. The memory 304 also stores data such as mapping data used by the processor 302 to perform the functions and provide the functionalities described herein, such as performing automated determination of a platform type. The memory 304 may also store data which is output when the executable instructions are executed by the processor 302. The memory 304 may include one or more memory devices or data storage devices. For example, the memory 304 may include one or more of storage device 14 and storage device 20 of Figure 1. In embodiments where the memory 304 includes multiple memory or data storage devices, the multiple memory or data storage devices may be implemented at a single computing device or across multiple computing devices.

The system 300 further includes a communication interface 306. The communication interface 306 is configured to transmit and receive data to and from the computer system 300. In an embodiment, the communication interface 306 may include a network interface for communicating with one or more networked computing devices.

The system 300 further includes a user input device 308. The user input device 308 is configured to receive a user input from a user interacting with the system 300. The processor 302 may generate user input data in response to the user input received via the user input device 308 and store the user input data in memory 304. The user input data may then be used by the processor 302 to control operation of the system 300.

The system 300 further includes a display device 310. The display device 310 is configured to display an output generated by the processor 302. In an embodiment, the display device 310 may display a graphical user interface configured to receive user input such that a user can interact with the system 300 and view outputs generated thereby. The processor 302 includes a forensic image acquisition module 312. The forensic image acquisition module 312 is configured to acquire a forensic image 314 of an electronic storage media on a target device. The acquisition may be, for example, a logical acquisition or mirror. The target device may be connected to the computer system 300 by the communication interface 306.

The forensic image 314 is stored in the memory 304. The forensic image 314 is an image of the electronic storage media of the target device. The forensic image 314 may be considered a comprehensive duplicate of electronically stored information or electronic media. The electronic media may be a hard disk drive. The forensic image 314 may also be a copy of unaltered electronically stored information. The forensic image 314 may be one or more of a raw image such as a file dump, a container, an AF4, tar file, and a zip file. The forensic image 314 provides a forensically valid form of the electronically stored information from the imaged target device. The forensic image 314 may be able to be further processed and investigated off the target device. The forensic image 314 may include at least one partition. Each partition may include at least one partition platform. The partition platform may be of a partition platform type. It may be beneficial to investigating the target device to know a platform type of the forensic image based on the partition platform type. The platform type may be an operating system (OS) type. In an example, the partition platform type or platform type may be one or more of Microsoft Windows, Apple MacOs, Linux, Unix, iOS, and Andriod OS.

The processor 302 further includes a platform determination module 320 for automatically determining a platform type of the target device based on the forensic image 314. Determining the platform type of the forensic image 314 supports platform type specific processing of the forensic image 314. The platform determination module 320 processes the forensic image 314 and generates platform determination output data 322. The platform determination output data 322 includes at least one platform type that has been detected by the platform determination module 320.

Each determined platform in the platform determination output data 322 may be represented by a platform type identifier. Generally, each platform type that can be determined by the platform determination module 320 may be represented in the system 300 by a unique platform type identifier. The unique platform type identifier may be an alphanumeric string. The platform determination output data 322 is stored in the memory 304. The processor 302 (e.g. via platform determination module 320) may be configured to provide the platform determination output data 322 to another system by the communication interface 306 for supporting further processing of the forensic image 314. The platform determination output data 322 may also be displayed via the display 310. For example, the platform determination module 320 may be configured to generate a user interface configured for display at display 310 that includes platform determination output data 322 or some subset thereof.

The platform determination module 320 includes an image loading module 324. The image loading module 324 is configured to load the forensic image 314. Loading the forensic image 314 may enable further interaction with the forensic image 314. The forensic image 314 may be wrapped in a forensic container. The forensic container may be of a forensic container type such as E01, DD, or AFF4. Loading the forensic image 314 may include one or more of opening the forensic image 314 and unpacking the forensic image 314. Loading the forensic image 314 may further include mounting the forensic image 314. Loading the forensic image 314 may further include putting an application programming interface (API) in front of the forensic image 314. The forensic image 314 may include hashes of content to validate the success of loading the forensic image 314.

Loading the forensic image 314 may not be necessary to determine the platform type of the forensic image 314. In an example, the forensic image 314 may be raw bytes and the forensic image 314 does not need to be loaded. Not loading the forensic image 314 may be desirable to reduce the processing power used by the platform determination module 320 by using fewer instructions. The image loading module 320 may also fail to load the forensic image 314. In such cases, certain methods of the determining module 320 may determine the platform type of the forensic image 314 without loading the forensic image. In an example, the file naming pattern module 326, described further below, determines the platform type from the file name of forensic image 314. The file name of the forensic image 314 may be obtained by the file naming pattern module 326 without loading the forensic image 314. Therefore, the file naming pattern module 326 may not load the forensic image 314 in determining the platform type. In a further example, an encryption type of the entire forensic image 314 may also be obtained without loading the forensic image. Therefore, the encryption type module 346 may not load the forensic image 314 in determining the platform type.

The platform determination module 320 further includes a file naming pattern module 326. The file naming pattern module 326 may be configured to determine a platform type of the forensic image 314 based on a file naming pattern of the forensic image 314. It will be understood that the file naming pattern disclosed in this disclosure may be a file naming pattern or any marker of the forensic image 314 indicating a file naming pattern. Specific file imaging tools use known rule sets to name forensic images 314. Therefore, the name of the forensic image 314, based on the rule sets, may include a file naming pattern which indicates a platform type of the forensic image 314. The file naming pattern module 326 may be configured to determine the platform type of the forensic image 314 based on a file naming pattern of one or more of segments, partitions, and files included in the forensic image 314.

In an example, the image 314 may have file naming patterns that include file naming pattern markers standard to the Facebook android application naming convention. These file naming patterns markers would not typically be of files on platform types other than Android. Therefore, these file naming patterns, if detected on an image 314, may be used by the system 300 to determinatively identify that the platform type of the image 314 as Android.

The file naming pattern module 320 uses a file naming pattern mapping data structure 328 in determining whether a detected file naming pattern maps to a platform type. The file naming pattern mapping data structure 328 is stored in memory 304.

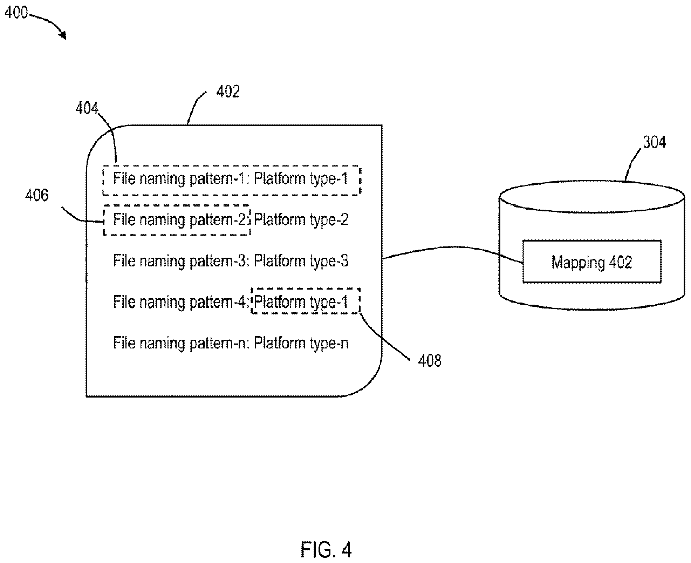

Referring now to Figure 4, shown therein is a representation 400 of an example 402 of the file naming pattern mapping data structure 328 of Figure 3, according to an embodiment. Mapping data structure 402 is stored in the memory 304. The file naming pattern mapping data structure 402 includes a plurality of mappings 404. Each mapping 404 includes a file naming pattern 406 and a corresponding platform type 408. The mappings 404 may act as key: value pairs in which the file naming pattern 406 is the key and the platform type 408 is the value. In an example, the mapping data structure 402 may act as a lookup data structure where the key 406 can be used (by the file naming pattern module 426) to look up whether there is a corresponding mapped value 408. Generally, each mapping 404 may be deterministic in the sense that a given 406 only maps to one platform type 408. In some cases, multiple different keys 406 may map to the same value 408. For example, in Figure 4, file naming pattern-1 and file naming pattern-4 each map to platform type-1.

In a particular example, the mapping data structure 402 may include a mapping 404 wherein the value of the file naming pattern 406 of the mapping 404 is the string "bmk" and the platform type 408 of the mapping 404 is Android. In such an example, if the file naming pattern module 426 detects a bmk naming pattern in the forensic image 314, the file naming pattern module 426 may then determine that the platform type is Android using the mapping 404. Upon determining the platform type is Android, the platform determination module 320 may then output platform determination output data 322 indicating Android as a determined platform type.

Referring again to Figure 3, the file naming pattern module 326 is configured to obtain at least one file naming pattern by examining the forensic image 314. The forensic image 314 may be read in to facilitate the examination. The file naming pattern module 326 may examine the name of directories, files, or collections of files such as volume shadow copies or registry hives to obtain the file naming pattern. For example, the file naming pattern module 326 may be configured to scan the forensic image 314 for file naming patterns associated with volume shadow copies, specific registry hives, or the like (which can, for example, be mapped to a particular platform type). The file naming pattern module 326 may be configured to load the file naming pattern mapping data structure 328. The file naming pattern module may be configured to lookup the file naming pattern in the file naming pattern data structure 328 as the key 406 of Figure 4. If the key 406 is not found in a mapping the file naming pattern the file naming pattern module 326 may be configured to exit the determination by file naming pattern. If the key 406 is found in a mapping, the value 408 of Figure 4 corresponding to the key 406 is returned and stored as platform determination output data 322. The platform determination output data 322 may include a plurality of platform types. In an example, the key 406 maps to a plurality of platform types. In this example, the platform determination output data 322 includes a plurality of platform types.

In an embodiment, the file naming pattern module 326 may be configured to implement method 1000 of Figure 10, described below, to determine the platform of the forensic image 314.

The platform determination module 320 may be configured to further process one or more of the forensic image 314 and the platform determination output data 322 for reducing the platform types of the platform determination output data 322. This processing may be performed by one or more of the platform determination module 320 and the modules of platform determination module 320 described below.

The processor 302 may further include a forensic data processing and extraction engine 330. The forensic data processing and extraction engine 330 is configured to extract forensic data items 332 from the forensic image 314. The forensic data items 332 may be data items that are relevant to a forensic investigation. The forensic data items 332 are stored in the memory 304. The forensic data items 332 may be provided to a second system for further processing via the communication interface 306. The forensic data items 332 may be displayed on the display 310. The forensic data items 332 may include data artifacts.

Generally, the forensic data processing and extraction engine 330 includes at least one forensic data processing tool 334 for processing the forensic image 314. Each forensic data processing tool 334 may be configured to extract forensic data items 332 of a particular type. Each tool 334 may be platform-specific in the sense that the ability of the tool extract data items 332 from the forensic image 314 may be limited to specific platform types (e.g. a single platform type, or multiple platform types). Attempting to extract forensic data items with a tool 334 that is platform-specific to a platform which is not the platform type of the forensic image 314 may result in using processing power unnecessarily or without the desired effect. The result may be that the tool 334 crashes, does not work, hangs, or returns garbage or nonsense bytes. With this result, time of a forensic investigation is wasted.

Determination of which forensic data processing tool(s) 334 to use to process forensic image 314 is performed automatically using a platform specific processing tool mapping data structure 336. The platform specific processing tool mapping data structure 336 is stored in the memory 304.

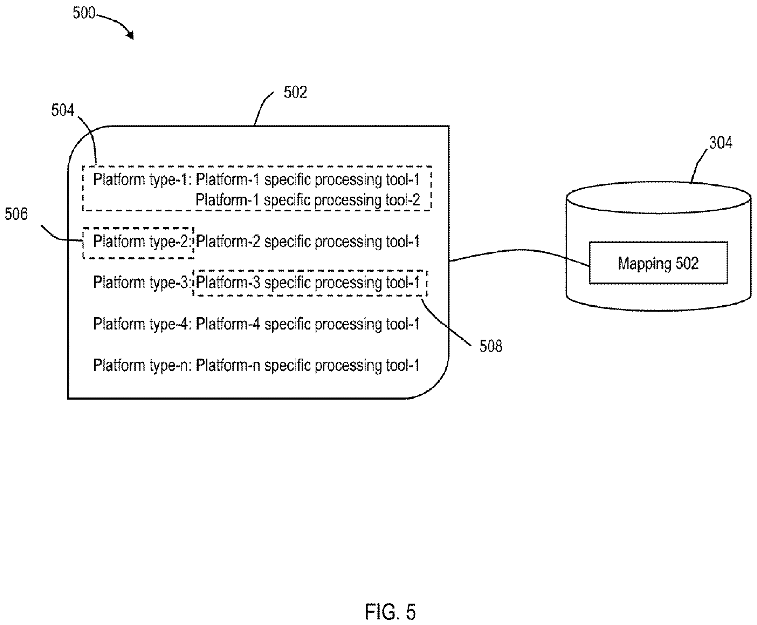

Referring now to Figure 5, shown therein is a representation 500 of an example 502 of the platform specific processing tool mapping data structure 336 of Figure 3, according to an embodiment. Mapping data structure 502 is stored in the memory 304.

The mapping data structure 502 includes a plurality of mappings 504. Each mapping 504 includes at least one platform type 506. Each platform type 506 maps to corresponding platform-specific processing tools 508. The mappings 504 may act as key: value pairs in which the platform type 506 is the key and the at least one platform specific processing tool 508 is the value. In an example, the mapping data structure 502 may act as a lookup data structure where the key 506 can be used to look up whether there is a corresponding mapped value 508. The key 506 may be the platform type of the output data 322 of Figure 3.

In an example, a platform type 506 may not map to any platform specific processing tools 508. In this example, the system may provide the user with an option such as a manual option, to choose what tools to run. For example, the system may generate and display a user interface displaying a list of selectable tools which, when selected, cause the system to run the tool(s).

A platform type 506 may map to a plurality of platform specific processing tools 508. For example, in Figure 5, platform type-1 maps to platform-1 specific processing tool-1 and platform-1 specific processing tool-2.

In some cases, different platform types 506 may map to the same platform specific processing tool 508. In such a case, the platform-specific processing tool 508 can be used on forensic images of more than one platform type (and is thus "specific" for multiple platforms). For example, the platform-3 specific processing tool-1 and platform-4 specific processing tool-1 may be the same.

As further described herein, in some cases, mapping data structure 502 may include values 508 corresponding to digital forensic workflows (implementing one or more platform specific processing tools), rather than to the processing tools themselves such that a specific platform type, once determined, may cause execution of a particular digital forensic workflow mapped to the specific platform type in mapping data structure 502.

In a particular example, the mapping data structure 502 may include a mapping 504 wherein the value of the platform type 506 of the mapping 504 is Windows and the platform specific processing tool 508 is a processing tool 508 that is configured to be run on a forensic image of a windows platform type.

In an embodiment, the mapping data structure 502 may be configured by an end user. In this embodiment, a storage location is provided for the user configured mapping data structure 502. Configuring the mapping data structure 502 by an end user provides the end user with the option to customize the platform-specific processing tools 508 of the mapping. This is beneficial as different forensic investigations may benefit from different types of extracted data items which may be extracted by different platform-specific processing tools 508. In an example, the types of data desired (and thus the types of tools that are configured to extract or retrieve such data) may be specific to particular types or categories of forensic investigations such as criminal activity, corporate espionage, or incident reports. The investigation tools may also be limited based on the tools available to the forensic lab investigating the forensic image and thus it may be desirable for the mapping data structure 502 to be user configurable.

Referring again to Figure 3, the forensic data processing and extraction engine 330 may be configured to receive the at least one platform type of the platform determination output data 322. The platform type may be received from the platform determination module 320. The forensic data processing and extraction engine 330 may be configured to load the platform type from the memory 304. The forensic data processing and extraction engine 330 may be configured to lookup the platform type in the platform specific processing tool mapping data structure 336 as the key 506 of Figure 5. The forensic data processing and extraction engine 330 is configured to process the forensic image 314 with the platform specific forensic data processing tools 334 returned by the lookup.

The platform determination output data 322 may include a plurality of platform types. The forensic data processing and extraction engine 330 may process the forensic image 314 with the platform specific forensic data processing tools 334 returned by a lookup in the platform specific processing tool mapping data structure 336 of each of the plurality of platform types of the platform determination output data 322. If the same platform specific processing tool 334 is returned for a plurality of lookups based on an individual forensic image 314, the forensic image 314 may be processed only once by the platform specific processing tool 334.

The processor 302 may further include a forensic data review and analysis module 338.

The forensic data review and analysis module 338 analyzes the extracted data items 332 into analysis output data 340. The analysis output data 340 presents the extracted data items 332 in a manner that supports a forensic investigation. The analysis output data 340 may be provided to a second system for further processing via the communication interface 306. The analysis output data 340 may be a report. The analysis output 340 may be a visualization of extracted data items or some derivative data thereof. In some cases, the visualization may indicate relationships between multiple data items. The analysis output data 340 may be displayed on the display 310. The presentation on the display of the analysis output data 340 may be such that the presentation can be interfaced with by a user via the user input device 308.

The platform determination module 320 further includes an encryption type module 346.

The encryption type module 346 is configured to determine a platform type of the forensic image 314 based on an encryption type of the forensic image 314. It will be understood that the encryption type disclosed in this disclosure may be an encryption type or any marker of the forensic image 314 indicating an encryption type. The encryption type may be of the entire forensic image 314. Indicators of the encryption type may come from a header. Therefore, it may not be necessary to load the forensic image 314 or decrypt the forensic image 314 to detect the encryption type. The encryption type may also be any part of the forensic image 314.

The encryption type module 346 uses an encryption type mapping data structure 338 in determining a platform type of the forensic image 314 based on a detected encryption type. The encryption type mapping data structure 348 is stored in the memory 304.

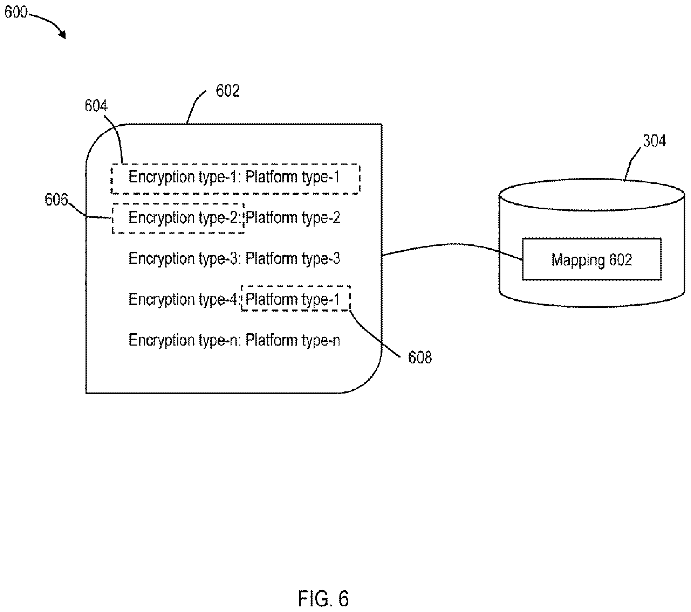

Referring now to Figure 6, shown therein is a representation 600 of an example 602 of encryption type mapping data structure 348 of Figure 3, according to an embodiment. Mapping data structure 602 is stored in the memory 304.

The mapping data structure 602 includes a plurality of mappings 604. Each mapping 604 includes an encryption type 606 and a corresponding platform type 608. The mappings 604 may act as key: value pairs in which the 606 is the key and the 608 is the value. In an example, the mapping data structure 602 may act as a lookup data structure where the key 606 can be used to look up whether there is a corresponding mapped value 608.

Generally, each mapping 604 may be deterministic in the sense that a given 606 only maps to one platform type 608. In some cases, multiple different keys 606 may map to the same value 608. For example, in Figure 6, encryption type-1 and encryption type-4 each map to platform type-1.

In an example, the mapping data structure 602 may include a mapping 404 wherein the value of the encryption type 606 of the mapping 604 is the encryption type "bitlocker" and the platform type 608 of the mapping 604 is "Microsoft Windows", given that bitlocker is a type of encryption specific to Windows platforms.

Referring again to Figure 3, the encryption type module 346 is configured to obtain at least one encryption type from the forensic image 314. The encryption type module 346 may be configured to load the encryption type mapping data structure 348. The encryption type module 346 may be configured to lookup the obtained encryption type in the encryption type data structure 338 as the key 606 of Figure 6. If the key 606 is not found in a mapping 604, the encryption type module 346 may be configured to exit the determination by encryption. If the key 606 is found in a mapping 604, the value 608 of Figure 6 corresponding to the key 606 is returned and stored as platform determination output data 322. The platform determination output data 322 may include a plurality of platform types. In some cases, a key 606 may map to a plurality of platform types. In this example, the platform determination output data 322 includes a plurality of platform types.

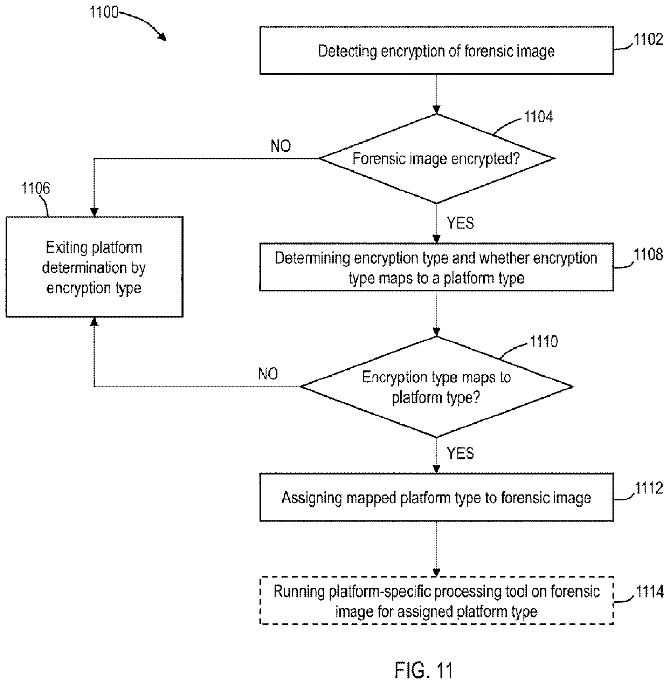

In an embodiment, the encryption type module 346 may be configured to implement method 1100 of Figure 11, described below, to determine the platform of the forensic image 314.

The platform determination module 320 further includes a file system type module 350.

The file system type module 350 is configured to determine a platform type of the forensic image 314 based on a file system type of the forensic image 314. It will be understood that the file system type disclosed in this disclosure may be a file system type or any marker of the forensic image 314 indicating a file system type. The file system type may be of the entire forensic image 314. The file system type may also be any part of the forensic image 314.

The file system type module 350 uses a file system type mapping data structure 352 in determining platform type based on file system type. The file system type mapping data structure 352 is stored in the memory 304.

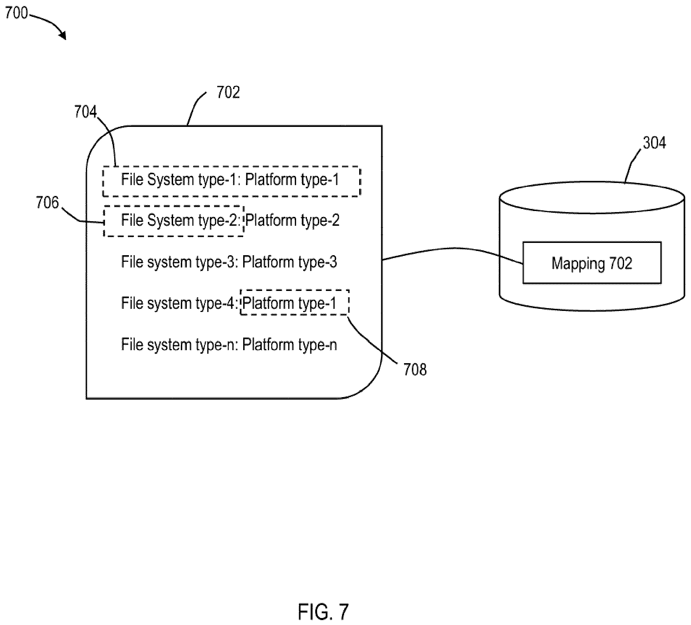

Referring now to Figure 7, shown therein is a representation 700 of an example 702 of a file system type mapping data structure 352 of Figure 3, according to an embodiment. The mapping data structure 702 is stored in the memory 304.

The mapping data structure 702 includes a plurality of mappings 704. Each mapping 704 includes a file system type 706 and a corresponding platform type 708. The mappings 704 may act as key: value pairs in which the 706 is the key and the 708 is the value. In an example, the mapping data structure 702 may act as a lookup data structure where the key 706 can be used to look up whether there is a corresponding mapped value 708.

Generally, each mapping 704 may be deterministic in the sense that a given 706 only maps to one platform type 708. In some cases, multiple different keys 706 may map to the same value 708. For example, in Figure 7, file system type-1 and file system type-4 each map to platform type-1.

In a particular example, the mapping data structure 702 may include a mapping 704 wherein the value of the file system type 706 of the mapping 704 is the file system type NTFS and the platform type 708 of the mapping 704 is Microsoft Windows, given that NTFS is a file system type specific to Windows platforms. The mapping data structure 702 may further include a mapping 704 wherein the value of the file system type 706 of the mapping 704 is the file system type APFS and the platform type 708 of the mapping 704 is Apple MacOS. The mapping data structure 702 may further include a mapping 704 wherein the value of the file system type 706 of the mapping 704 is the file system type FAT and the platform type 708 of the mapping 704 is Microsoft Windows, Apple MacOS, and Linux.

Referring again to Figure 3, the file system type module 350 is configured to obtain at least one file system type from the forensic image 314. The file system type module 350 may be configured to load the file system type mapping data structure 352. The file system type module 350 may be configured to lookup the file system type in the file system type mapping data structure 352 as the key 706 of Figure 7. If the key 706 is not found in a mapping the file system type module 350 is configured to exit. If the key 706 is found in a mapping, the value 708 of Figure 7 corresponding to the key 706 is returned and stored as platform determination output data 322. The platform determination output data 322 may include a plurality of platform types. In an example, the key 706 maps to a plurality of platform types. In this example, the platform determination output data 322 includes a plurality of platform types.

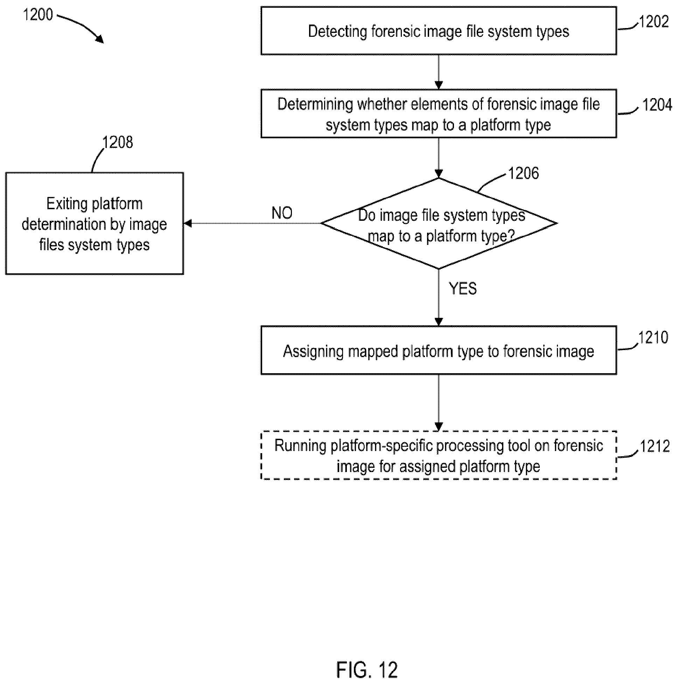

In an embodiment, the file system type module 350 may be configured to implement method 1200 of Figure 12, described below, to determine the platform type of the forensic image 314.

The platform determination module 320 further includes a file system structure metadata module 354.

The file system structure metadata module 354 is configured to determine a platform type of the forensic image 314 based on a file system structure metadata of the forensic image 314. It will be understood that the file naming pattern disclosed in this disclosure may be a file system structure metadata or any marker of the forensic image 314 indicating a file system structure metadata. The file system structure metadata may be, for example, a master boot record, a global partition table, an apple partition table, a volume boot record, or other file system structure metadata specific for a particular platform type.

The file system structure metadata module 354 uses a file system structure metadata mapping data structure 356 to determine a platform type based on the forensic image 314. The file system structure metadata mapping data structure 356 is stored in the memory 304.

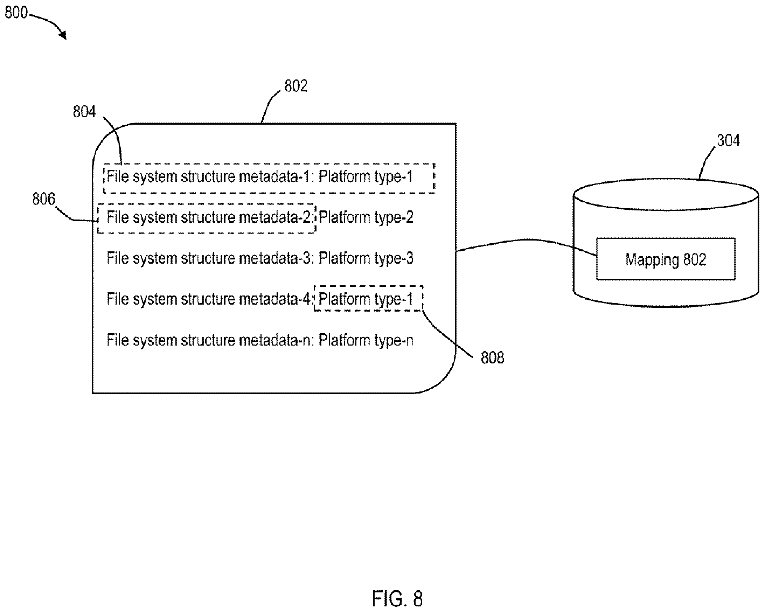

Referring now to Figure 8, shown therein is a representation 800 of an example 802 of a file system structure metadata mapping data structure 356 of Figure 3, according to an embodiment. The mapping data structure 802 is stored in the memory 304.

The mapping data structure 802 includes a plurality of mappings 804. Each mapping 804 includes a file system structure metadata 806 and a corresponding platform type 808. The mappings 804 may act as key: value pairs in which the 806 is the key and the 808 is the value. In an example, the mapping data structure 802 may act as a lookup data structure where the key 806 can be used to look up whether there is a corresponding mapped value 808.

Generally, each mapping 804 may be deterministic in the sense that a given 806 only maps to one platform type 808. In some cases, multiple different keys 806 may map to the same value 808. For example, in Figure 8, file system structure metadata-1 and file system structure metadata-4 each map to platform type-1 .

In an example, the mapping data structure 802 may include a mapping 804 wherein the value of the file system structure metadata 806 of the mapping 804 is "Apple partition table" and the platform type 808 of the mapping 804 is "Mac OS". In another example, the mapping data structure 802 may include a mapping 804 wherein the value of the file system structure metadata 806 of the mapping 804 is "master boot record" and the platform type 808 of the mapping 804 is "Microsoft Windows".

Referring again to Figure 3, the file system structure metadata module 354 is configured to obtain at least one file system structure metadata from the forensic image 314. The file system structure metadata module 354 may be configured to load the file system structure metadata mapping data structure 356. The file system structure metadata module 354 may be configured to lookup the file system type in the file system structure metadata data structure 356 as the key 806 of Figure 8. If the key 806 is not found in a mapping the file system structure metadata module 354 is configured to exit. If the key 806 is found in a mapping, the value 808 of Figure 8 corresponding to the key 806 is returned and stored as platform determination output data 322. The platform determination output data 322 may include a plurality of platform types. In an example, the key 806 maps to a plurality of platform types. In this example, the platform determination output data 322 includes a plurality of platform types.

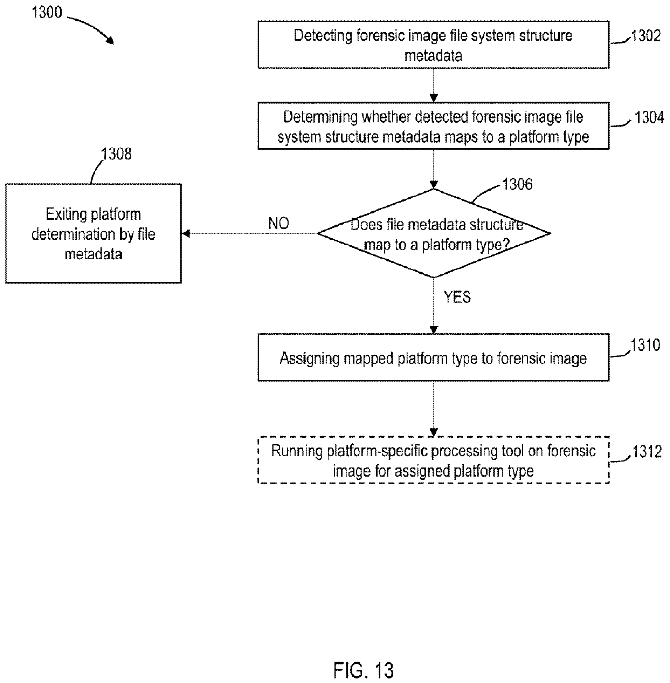

In an embodiment, the file system structure metadata module 354 may be configured to implement method 1300 of Figure 13, described below, to determine the platform of the forensic image 314.

The platform determination module 320 further includes a heuristic determination module 358. The heuristic determination module 358 is configured to determine a platform type of the forensic image 314 based on at least one marker of the forensic image 314. The heuristic determination module 358 is configured to obtain the marker by examining the forensic image heuristically. The element may be any one or more of a file naming pattern marker (such as the file naming pattern 406 of Figure 4), and encryption type marker (such as the encryption type 606 of Figure 6), a file system type marker (such as the file system type 706 of Figure 7), and a file system structure metadata marker (such as the file system structure metadata 806 of Figure 8).

The heuristic determination module 358 may be configured to examine the forensic image 314 by traversing the directory structure. In an embodiment, the examination may proceed until a platform type is determinatively identified. In another embodiment, the examination may proceed until a threshold is reached. Reaching the threshold may terminate the examination.

In an embodiment, the threshold is a confidence threshold. The examination may proceed until a platform type is determined within a confidence threshold.

In another embodiment, the threshold is a preset directory level depth threshold such that a preset number of directory layers are traversed. The present disclosure recognizes that determinative elements of platform types in existing systems typically are in the first five directory layers. In an embodiment, the layer threshold may be five or six layers. This may balance the benefit of determinatively determining the platform type with the probability of determining obtaining an element that contributes to determining the platform type, expending processing power of the system, and the time spent determining the platform type.

In another embodiment, the threshold is a processing power threshold. The examination may proceed until a processing power threshold is reached. The processing power threshold may be based on a reasonable amount of processing power to be expended for determining a platform type.

In another embodiment, the threshold is a time threshold. The examination may proceed until a time threshold is reached. The time threshold may be based on a reasonable time period to have passed for determining a platform type.

The heuristic determination module 358 may be configured to store the results of the examination in a heuristic determination data structure 360. The heuristic determination module 358 may further use the heuristic determination data structure 360 to determine the platform type. The heuristic determination data structure 360 may be stored in the memory 304.

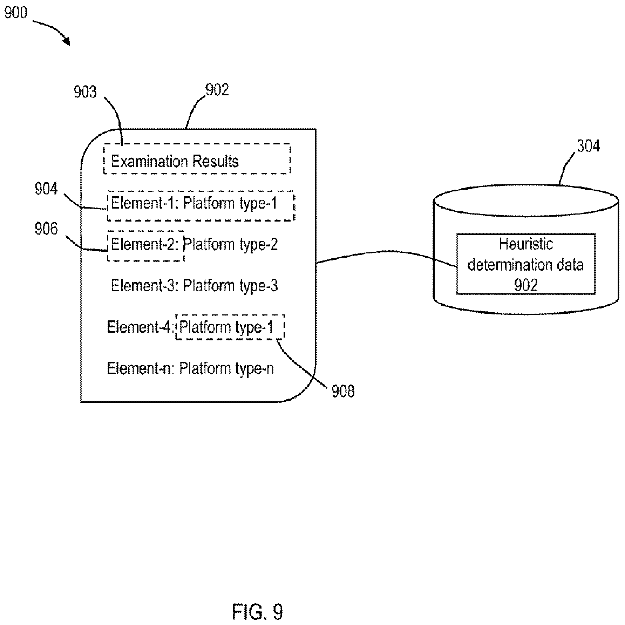

Referring now to Figure 9, shown therein is a representation 900 of an example 902 of the heuristic determination data structure 360 of Figure 3, according to an embodiment. The heuristic determination data structure 902 is stored in the memory 304 of Figure 3.

The heuristic determination data structure 902 may include examination results 903. The examination results 903 include the data resulting from the examination of the forensic image 314 by the heuristic determination module 358. The examination results 903 may also include data resulting from a partial examination of the forensic image 314. The examination results 903 may also include data resulting from an examination, full or partial, of a second forensic image, other than the forensic image 314.

The heuristic determination data structure 902 further includes a plurality of mappings 904. Each mapping 904 includes an element 906 and a corresponding platform type 908. The mappings 904 may act as key: value pairs in which the 906 is the key and the 908 is the value. In an example, the heuristic determination data structure 902 may act as a lookup data structure where the key 906 can be used to look up whether there is a corresponding mapped value 908.

Generally, each mapping 904 may be deterministic in the sense that a given key 906 only maps to one platform type 908. In some cases, multiple different keys 906 may map to the same value 908. For example, in Figure 9, element-1 and element-2 each map to platform type-1.

Referring again to Figure 3, The heuristic determination module 358 may be further configured to reconfigure the data of the heuristic determination data structure 360 based on the results of the examination. In this way, the heuristic determination data structure 360 may be improved by the examination of each layer. The heuristic determination data structure 360 may also be improved by the examination of each additional forensic image examined by the computer system 300. The heuristic determination data structure 360 may also be improved via external data. The external data may be data of a second heuristic determination data structure of a second computer system.

In an embodiment, the heuristic determination module 358 may be configured to examine five or six directory layers of the forensic image 314. The number of layers may be set based on where platform indicative files are generally located. For example, in existing systems, these files or data markers are generally located higher up in the directory structure. In existing systems, it is unlikely that the platform indicative files are lower than five or six layers down in the forensic image 314. The number of layers examined by the heuristic determination module 358 may be based on the data of the heuristic determination data structure 360. The number of layers examined by the heuristic determination module 358 may also be based directly on the results of the examination of one or more preceding layers.

Each layer may be examined in whole or in part. The extent to which a layer is examined by the heuristic determination module 358 may be based on the data of the heuristic determination data structure 360. The extent to which a layer is examined by the heuristic determination module 358 may also be based directly on the results of the examination of one or more preceding layers.

The heuristic determination module 358 is configured to obtain at least one element from the forensic image 314. The heuristic determination module 358 may be configured to load the heuristic determination data structure 360. The heuristic determination module 358 may be configured to lookup the element in the heuristic determination data structure 360 as the key 906 of Figure 9. If the key 906 is not found in a mapping the heuristic determination module 358 is configured to exit. If the key 906 is found in a mapping, the value 908 of Figure 9 corresponding to the key 906 is returned and stored as platform determination output data 322. The platform determination output data 322 may include a plurality of platform types. In an example, the key 906 maps to a plurality of platform types. In this example, the platform determination output data 322 includes a plurality of platform types.

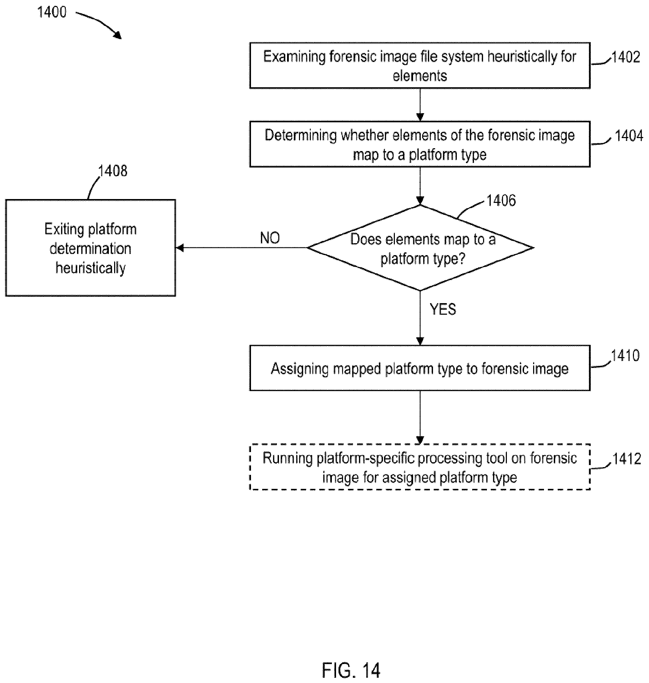

In an embodiment, the heuristic determination module 358 may be configured to implement method 1400 of Figure 14, described below, to determine the platform of the forensic image 314.

In some embodiments, the heuristic determination module 358 may be configured to implement a voting system. A confidence score may be generated indicating a confidence level associated with a particular platform type assignment, based on heuristic analysis by the module 358. Confidence scores may be generated for a plurality of platform types. For example, in some cases, a first set of elements detected may indicate a first platform type and a second set of elements detected may indicate a second platform type. The voting system may be configured to determine a first confidence score associated with assigning the first platform type to the forensic image based on at least the first set of detected elements and a second confidence score associated with assigning the second platform type to the forensic image based on at least the second set of detected elements. The voting system may be further configured to evaluate the first and second confidence scores and assign the first platform type, the second platform type, or neither platform type. For example, the voting system may assign the platform type corresponding to the highest confidence score. In another example, the voting system may assign the platform corresponding to the highest confidence score only if that confidence score meets a predefined threshold confidence score.

Referring now to Figure 10, shown therein is a method 1000 of determining a platform of a target device from a forensic image of the target device based on a file naming pattern of the forensic image, according to an embodiment.

The method 1000 may be implemented at step 206 of Figure 2. The method 1000 may be implemented by the computer system 300 of Figure 3. In particular, the method 1000 may be encoded as computer-executable instructions in the file naming pattern module 326 of Figure 3.

At 1002, the method 1000 includes detecting at least one forensic image file naming pattern data marker of the forensic image. The at least one naming pattern data marker may include a character or string of the image file name of the forensic image file. Generally, forensic imaging tools used to generate a forensic image may include naming pattern data markers that are determinative of a specific platform or operating system type. For example, a first forensic imaging tool may use a naming pattern that includes a first data marker for a forensic image file generated for a first platform type. The first forensic imaging tool may use a naming structure that includes a second data marker for a forensic image generated for a second platform type. The first and second data markers may be unique to the first forensic imaging tool.

The at least one naming pattern data marker may include a character or string of a file naming pattern of at least on file of the forensic image file. Generally, naming patterns of files of the forensic image file may include naming pattern data markers that are determinative of a specific platform or operating system type. For example, a file naming pattern may include a first data marker generated for a file of a first platform type. The file naming pattern may include a second data marker for a file of a first platform type. The first and second data markers may be unique to a platform type.

The naming pattern data marker may be a character or a string. In an example, file naming pattern may include the string "_bmk" as a naming pattern data marker. The naming pattern data marker may further be contextual. In an example, the naming pattern data marker may be the character "\" preceded by another alpha numeric character. The naming pattern data marker may also be the full name of the file. In some cases, the file naming pattern may include a plurality of naming pattern data markers which independently or in conjunction map to a platform. In an example, the file naming pattern may include a "/" followed by an alpha-numeric character and the string "_bmk".

At 1004, the method 1000 includes determining whether the detected at least one forensic image file naming pattern data marker of the forensic image maps to a platform type using mapping data. The mapping data includes at least one mapping of a forensic image file naming structure data marker to a platform type. Using the example provided above at 1002, the mapping data may include a mapping of the first data marker to the first platform type. For example, the mapping data may be the mapping 404 of Figure 4.

In an example, the mapping data may include a mapping of a "_bmk" data marker to a platform type of "Android" and the first data marker value may be the string "_bmk". In this example, the platform detected would be Android.

At 1006, the method 1000 branches depending on whether the detected forensic image files naming structure data marker maps to a platform type in the mapping data.

If the detected forensic image files naming structure data marker does not map to a platform type at 1006, the method proceeds to 1008.

At 1008, the method 1000 includes exiting the platform detection by forensic image file naming structure. Exiting at 1008 may include exiting the platform detection operation completely. This may be the case if method 1000 is performed last in a sequence of detection operations or if method 1000 is the only detection operation.

If the detected forensic image files naming structure data marker maps to a platform type at 1006, the method proceeds to 1010.

At 1010, the method 1000 includes assigning a mapped platform type to the forensic image. The mapped platform type is the platform type to which the detected forensic image file naming structure data marker maps. The assigning may be performed by a processor configured to output the mapped platform type when given the detected forensic image files naming structure data marker as input.

At 1012, the method 1000 may include running a platform-specific processing tool on the forensic image for the assigned platform type. This may include using a mapping of the assigned platform type to the platform-specific processing tool to determine the platform-specific processing tool. The mapping may be, for example, the mapping 504 of Figure 5.

In an example, if the assigned platform type is Microsoft Windows, indicating the forensic image was acquired from a target device running a Microsoft Window platform, then the platform-specific processing tool may be configured to extract data artifacts or other data items that are specific to Microsoft Windows or use processes that are specific for extracting data artifacts from a Microsoft Windows platform.

Referring now to Figure 11, shown therein is a method 1100 of determining a platform type of a target device from a forensic image of the target device based on an encryption type of the forensic image, according to an embodiment.

The method 1100 may be implemented at step 206 of Figure 2. The method 1100 may be implemented by the computer system 300 of Figure 3. In particular, the method 1100 may be encoded as computer-executable instructions in the encryption type module 346 of Figure 3.

At 1102, the method 1100 includes detecting whether the forensic image is encrypted. The encryption may be detected by examining header bytes of the forensic image. The header bytes may be the first sector of the disk of the forensic image.

At 1104, the method 120 branches depending on whether encryption of the forensic image has been detected.

If encryption of the forensic image is not detected at 1104, the method proceeds to 1106.

At 1106, the method 1100 includes exiting the platform detection by encryption type. Exiting at 1108 may include exiting the platform detection operation completely. This may be the case if method 1100 is performed last in a sequence of platform detection operations or if method 1100 is the only detection operation.

If encryption of the forensic image is detected at 1104, the method proceeds to 1108.

At 1108, the method 1100 includes determining an encryption type of the encrypted forensic image and whether the encryption type maps to a platform type using mapping data. The encryption type may be determined based on any one or more of data patterns of the header bytes, byte markers of the header bytes, and entropy of the header bytes. The mapping data includes at least one mapping of an encryption type to a platform type. The mapping data may include, for example, a mapping of a first encryption type to a first platform type. For example, the mapping data may be the mapping 604 of Figure 6.

In an example, the mapping data may include a mapping of a "bitlocker" encryption type to a platform type of "Microsoft Windows" and the detected encryption value may be bitlocker. In this example, the platform detected would be Windows.

At 1110, the method 1100 branches depending on whether the determined encryption type maps to a platform type in the mapping data.

If the determined encryption type does not map to a platform type at 1110, the method proceeds to exiting the platform detection by encryption type at 1108.

If the determined encryption type does map to a platform type at 1110, the method proceeds to 1112.

At 1112, the method 1100 includes assigning a mapped platform type to the forensic image based on the detected and mapped encryption type. The mapped platform type is the platform type to which the detected encryption type maps. The assigning may be performed by a processor configured to output the mapped platform type when given the detected encryption type as input.

At 1112, the method 1100 may include running a platform-specific processing tool on the forensic image for the assigned platform type. This may include using a mapping of the assigned platform type to the platform-specific processing tool to determine the platform-specific processing tool. The mapping may be, for example, the mapping 504 of Figure 5.

In an example, if the assigned platform type is Microsoft Windows, indicating the forensic image was acquired from a target device running a Microsoft Window platform, then the platform-specific processing tool may be configured to extract data artifacts or other data items that are specific to Microsoft Windows or use processes that are specific for extracting data artifacts from a Microsoft Windows platform.

Referring now to Figure 12, shown therein is a method 1200 of determining a platform of a target device from a forensic image of the target device based on a file system type of the forensic image, according to an embodiment.

The method 1200 may be implemented at step 206 of Figure 2. The method 1200 may be implemented by the computer system 300 of Figure 3. In particular, the method 1200 may be encoded as computer-executable instructions in the file system type module 350.

At 1202, the method 1200 includes detecting at least one forensic image file system type of the forensic image. The file system type may be detected based on header markers. The file system type may also be detected based on the presence of specific data. The file system type may also be detected based on location of specific data. In an example, the file system type may one or more of NTFS, APFS, FAT, FAT32, and Thumb.

At 1204, the method 1200 includes determining whether the detected file system type maps to a platform type using mapping data. The mapping data includes at least one mapping of a file system type to a platform type. Using the example provided above at 1202, the mapping data may include a mapping of the first file system type to the first platform type. For example, the mapping data may be the mapping 704 of Figure 7.

In an example, the mapping data may include a mapping of a NTFS file system type to a Microsoft Windows platform and the first file system type value may be NTFS. In this example the platform detected is Microsoft Windows. In a further example, the mapping data may include a mapping of a APFS file system type to an apple platform and the first file system type value may be APFS. In this example the platform detected is Apple MacOS.

The mapping data may include a mapping wherein at least one of the file system types map to a plurality of platform types. In an example, the mapping data may include a mapping of a FAT file system type to a Microsoft Windows platform, an Apple MacOS platform, and a Linux system. In this example, the platform detected is not determinative. However, the platform detected may be narrowed to the plurality of platform types.

At 1206, the method 1200 branches depending on whether the detected file system type maps to a platform type in the mapping data.

If the detected file system type does not map to a platform type or maps to a plurality of platform types at 1206, the method proceeds to 1208.

At 1208, the method 1200 includes exiting the platform detection by file system type. Exiting at 1208 may include exiting the platform detection operation completely. This may be the case if method 1200 is performed last in a sequence of detection operations or if method 1200 is the only detection operation.

If the detected file system type maps to a platform type at 1206, the method proceeds to 1210.

At 1210, the method 1200 includes assigning a mapped platform type to the forensic image. The mapped platform type is the platform type to which the detected file system type maps. The assigning may be performed by a processor configured to output the mapped platform type when given the detected file system type as input.

At 1212, the method 1200 may include running a platform-specific processing tool on the forensic image for the assigned platform type. This may include using a mapping of the assigned platform type to the platform-specific processing tool to determine the platform-specific processing tool. The mapping may be, for example, the mapping 504 of Figure 5.

In an example, if the assigned platform type is Microsoft Windows, indicating the forensic image was acquired from a target device running a Microsoft Window platform, then the platform-specific processing tool may be configured to extract data artifacts or other data items that are specific to Microsoft Windows or use processes that are specific for extracting data artifacts from a Microsoft Windows platform.

In an embodiment, a forensic image may include a plurality of partitions. A first partition of the forensic image may have a first platform of a first platform type and a second partition of the forensic image may have a second platform of a second platform type. In some cases, the first platform type may be the same as the second platform type. In other cases, the first platform type may be different than the second platform type. The method at 1202 to 1204 may be repeated for each of the plurality of partitions. In this embodiment, the platform type assigned to the forensic image at 1210 may be based on a voting system. The voting system may be configured to assign the platform type based on the platform type mapped to the most partitions or to a threshold or relative percentage or proportion of partitions. The most partitions may be determined based on quantity. The most partitions may be determined based on a weighting. The weighting may consider one or more of partition volume and quantity.

Referring now to Figure 13, shown therein is a method 1300 of determining a platform of a target device from a forensic image of the target device based on a file metadata structure of the forensic image, according to an embodiment.

The method 1300 may be implemented at step 206 of Figure 2. The method 1300 may be implemented by the computer system 300 of Figure 3. In particular, the method 1300 may be encoded as computer-executable instructions in the file metadata structure module 354.

At 1302, the method 1300 includes detecting at least one forensic image file system structure metadata of the forensic image.

The forensic image may include at least one file system structure data. The file system structure data may be, for example, any one or more of a master boot record of one or more partitions, a global partition table, an apple partition table, or a volume boot record. The file system structure data may include at least one file system structure metadata. In an example, the file system structure metadata is a master boot record of a partition, and the value is an ID of the master boot record in hexadecimal, such as 0x7.

At 1304, the method 1300 includes determining whether the detected file system structure metadata maps to a platform type using mapping data. The mapping data includes at least one mapping of a file system structure metadata to a platform type. Using the example provided above at 1302, the mapping data may include a mapping of the first file system type to the first platform type. For example, the mapping data may be the mapping data structure 804 of Figure 8.

In an example, the mapping data may include a mapping of a hexadecimal value for a file system structure metadata to a Microsoft Windows platform and the value of the first file system structure metadata may be a hexadecimal value. In this example the platform detected is Microsoft Windows.

The mapping data may include a mapping wherein at least one of the file structure metadata maps to a plurality of platform types. In an example, the mapping data may include a mapping of a file structure metadata of a hexadecimal value to any Microsoft Windows platform but not be determinative of the version of Microsoft Windows (e.g. Windows 10, Windows 11). In this example, the platform detected is not determinative. However, the platform detected may be narrowed to the plurality of platform types.

At 1306, the method 1300 branches depending on whether the detected file structure metadata maps to a platform type in the mapping data.

If the detected file structure metadata does not map to a platform type or maps to a plurality of platform types at 1306, the method proceeds to 1308.

At 1308, the method 1300 includes exiting the platform detection by structure metadata. Exiting at 1308 may include exiting the platform detection operation completely. This may be the case if method 1300 is performed last in a sequence of detection operations or if method 1300 is the only detection operation.

If the detected file structure metadata maps to a platform type at 1306, the method proceeds to 1310.

At 1310, the method 1300 includes assigning a mapped platform type to the forensic image. The mapped platform type is the platform type to which the detected file structure metadata maps. The assigning may be performed by a processor configured to output the mapped platform type when given the detected file structure metadata as input.

At 1312, the method 1300 may include running a platform-specific processing tool on the forensic image for the assigned platform type. This may include using a mapping of the assigned platform type to the platform-specific processing tool to determine the platform-specific processing tool. The mapping may be, for example, the mapping 504 of Figure 5.

In an example, if the assigned platform type is Microsoft Windows, indicating the forensic image was acquired from a target device running a Microsoft Window platform, then the platform-specific processing tool may be configured to extract data artifacts or other data items that are specific to Microsoft Windows or use processes that are specific for extracting data artifacts from a Microsoft Windows platform, or may be configured to process forensic images of a Microsoft Windows platform.

In an embodiment, a forensic image may include a plurality of partitions. A first partition of the forensic image includes a first platform of a first platform type, and a second partition of the forensic image includes a second platform of a second platform type. The first platform type may be the same as the second platform type. The first platform type may also be different than the first platform type. The method at 1302 to 1304 may be repeated for each of the plurality of partitions. In this embodiment the platform type assigned to the forensic image at 1310 may be the platform type mapped to the most partitions. The most partitions may be determined based on quantity. The most partitions may be determined based on a weighting. The weighting may consider one or more of partition volume, and quantity.

Referring now to Figure 14, shown therein is a method 1400 of heuristically determining a platform of a target device from a forensic image of the target device, according to an embodiment.

The method 1400 may be implemented at step 206 of Figure 2. The method 1400 may be implemented by the computer system 300 of Figure 3. In particular, portions of the method 1400 may be encoded as computer-executable instructions in heuristic determination module 358 of Figure 3.

At 1402, the method 1400 examining the forensic image heuristically for at least one element. The examination may navigate five or six directory layers of the forensic image. The navigation may be recursive. The number of layers navigated may be based on the results of the examination of the preceding layers. Each layer may be examined in whole or in part. The extent to which a layer is examined may be based on the results of the examination of the preceding layers.

The at least one element may include one or more of a label, a structure of a directory structure, a specific file, and a specific file in a specific directory. The labels may include one or more of carrier, boot, devinfo, and cache

At 1404, the method 1400 includes determining whether the examined elements map to a platform type using the heuristic determination data. The heuristic determination data includes at least one mapping of at least one element to a platform type. The heuristic determination data may be adjusted based on the examination. The adjusted heuristic determination data may provide more likely or robust mapping for additional forensic images.

Using the example provided above at 1402, the mapping data may include a mapping of the first element to the first platform type. For example, the heuristic determination data may be the mapping 904 of Figure 9.

At 1406, the method 1400 branches depending on whether the examined at least one element maps to a platform type in the mapping data.

If the at least one element does not map to a platform type or maps to a plurality of platform types at 1406, the method proceeds to 1408.

At 1408, the method 1400 includes exiting the platform detection heuristically. Exiting at 1408 may include exiting the platform detection operation completely. This may be the case if method 1400 is performed last in a sequence of detection operations or if method 1400 is the only detection operation.

If the examined at least one element maps to a platform type at 1406, the method proceeds to 1410.

At 1410, the method 1400 includes assigning a mapped platform type to the forensic image. The mapped platform type is the platform type to which the examined at least one element maps. The assigning may be performed by a processor configured to output the mapped platform type when given the examined at least one element as input.

In some cases, method 1400 may include using a voting system as described herein to assign a platform type to the forensic image.

At 1412, the method 1400 may include running a platform-specific processing tool on the forensic image for the assigned platform type. This may include using a mapping of the assigned platform type to the platform-specific processing tool to determine the platform-specific processing tool. The mapping may be, for example, the mapping 504 of Figure 5.

In an example, if the assigned platform type is Microsoft Windows, indicating the forensic image was acquired from a target device running a Microsoft Window platform, then the platform-specific processing tool may be configured to extract data artifacts or other data items that are specific to Microsoft Windows or use processes that are specific for extracting data artifacts from a Microsoft Windows platform, or process a forensic image of a Microsoft Windows platform type.

In an embodiment, a forensic image may include a plurality of partitions. A first partition of the forensic image includes a first platform of a first platform type and a second partition of the forensic image includes a second platform of a second platform type. The first platform type may be the same as the second platform type. The first platform type may also be different than the first platform type. The method at 1402 to 1404 may be repeated for each of the plurality of partitions. In this embodiment the platform type assigned to the forensic image at 1410 may be the platform type mapped to the most partitions. The most partitions may be determined based on quantity. The most partitions may be determined based on a weighting. The weighting may consider one or more of partition volume, and quantity.

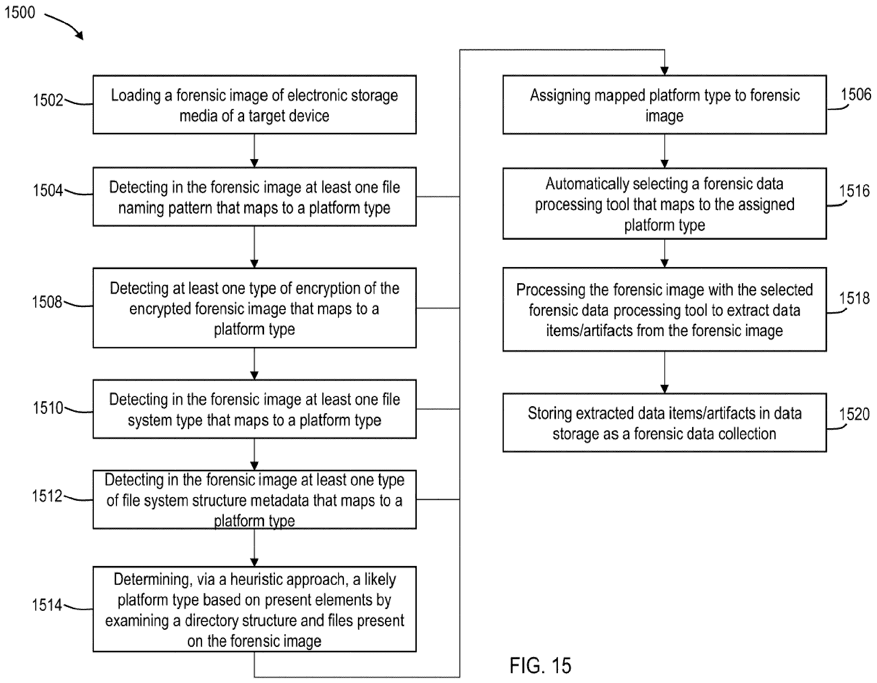

Referring now to Figure 15, shown therein is a method 1500 of processing a forensic image, including determining a platform type of the forensic image, according to an embodiment.

The method 1500 may correspond to 206 through 212 of the method 200 of Figure 2. The method 1500 may incorporate one or more of methods 1000, 1100, 1200, and 1300 in whole or in part.

At 1502, the method 1500 includes loading the forensic image of the electronic storage media of a target device.

The forensic image file may be loaded using any suitable technique for loading a forensic image such as existing techniques. In an example, the exiting technique is a software such as disc utils. Loading the image file may programmatically convert the image file to a series of APIs to ask questions from. The files may include questions such as "what are the volumes?", "What are the files?", "What are the directories?", "What are the folders?". Loading the image file allows the computer system to interact with the disc in a logical manner. Loading the image file may configure the file into a known file system. Loading the image file may be accomplished even if the image file is corrupted. Loading of a corrupted file may be accomplished even if the corruption prevents opening the file image. The loading technique may depend on the type of image being loaded. The type of image being loaded may be indicated in headers of the image file. If, at 1502, the forensic image cannot be loaded, the method may exit.

At 1504, the method 1500 includes detecting at least one file naming pattern of the forensic image and determining at least one platform type based on a file naming pattern mapping. The detection and determination of 1504 may be the detection 1002 and determination 1004 of Figure 10.

If, at 1504, at least one platform type is sufficiently determined, the method proceeds to 1506. In a particular embodiment, sufficiently determinative is such that all determined platform types map to any tool that at least one determined platform type maps to. In another embodiment, sufficiently determinative is such that at least one platform type is determined.

At 1506, the method 1500 includes assigning the mapped platform type to the forensic image.

If, at 1504 the platform type is not sufficiently determined, the method proceeds to 1508.

At 1508, the method 1500 includes detecting at least one encryption type of the forensic image and determining at least one platform type based on an encryption type mapping. The detection and determination of 1508 may be the detection 1102 and determination 1108 of Figure 11.

If, at 1508, an encryption type is detected and at least one platform type is sufficiently determined, the method proceeds to 1506.

If, at 1508 the platform type is not sufficiently determined, the method proceeds to 1510.

At 1510, the method 1500 includes detecting at least one file system type of the forensic image and determining at least one platform type based on a file system type mapping. The detection and determination of 1510 may be the detection 1202 and determination 1204 of Figure 12.

If, at 1510, at least one platform type is sufficiently determined, the method proceeds to 1506.

If, at 1510 the platform type is not sufficiently determined, the method proceeds to 1512.

At 1512, the method 1500 includes detecting at least one file system structure metadata of the forensic image and determining at least one platform type based on a file system structure metadata mapping. The detection and determination of 1512 may be the detection 1302 and determination 1304 of Figure 13.

If, at 1512, at least one platform type is sufficiently determined, the method proceeds to 1506.

If, at 1512 the platform type is not sufficiently determined, the method proceeds to 1514.

At 1514, the method 1500 includes heuristically examining the forensic image for at least one element and determining at least one likely platform type based on a heuristic determination data. The examination and determination of 1514 may be the detection 1402 and determination 1404 of Figure 14.

If, at 1514, at least one platform type is sufficiently determined, the method proceeds to 1506.

If, at 1514, the platform type is not sufficiently determined, the method employs a voting system to determine the platform and proceeds to 1506, according to an embodiment. According to a further embodiment, if, at 1514, the platform is not sufficiently determined, the method exits.

As described, at 1506, the method 1500 includes assigning the mapped platform type to the forensic image. The assigning may be based on a data output from any of 1504, 1508, 1510, 1512, and 1514. The assigning may be, for example, the assigning 1010 of Figure 10.

At 1516, the method 1500 includes automatically selecting a forensic data processing tool that is mapped to by the platform type assigned at 1506. This may be repeated recursively for each tool mapped to by the assigned platform type.

In some cases, 1516 may include selecting a predefined digital forensics processing workflow that maps to the assigned platform type. In such cases, the determined platform type may map to a processing workflow rather than one or more processing tools. The processing workflow may include a plurality of processing steps to be executed by one or more processing tools on the forensic image.

At 1518, the method 1500 includes processing the forensic image with the forensic data processing tool selected at 1516. This may include extracting forensic data items, such as data artifacts, from the forensic image. The processing performed at 1516 may correspond to 1012 of Figure 10.

At 1520, the method 1500 includes storing the extracted forensic data items in data storage as a forensic data collection. The forensic data collection, or a portion thereof, may then be displayed in a user interface for review by a user, or may be further processed or analyzed to generate investigative insights. The display of the forensic data collection may be interfaced with by a user via a user input device. The forensic data items may be provided to a second system for further processing via a communication interface.

While the above description provides examples of one or more apparatus, methods, or systems, it will be appreciated that other apparatus, methods, or systems may be within the scope of the claims as interpreted by one of skill in the art.

## Claims

1. A computer system for determining a platform type of a forensic image, the computer system comprising:
a memory comprising at least one storage device; and
a processor configured to:
store in the memory a mapping data structure including a mapping of at least one predetermined data marker type to at least one platform type;
automatically determine the platform type of the forensic image by:
scanning at least a part of the forensic image for the at least one predetermined data marker type;
where at least one data marker of the at least one predetermined data marker type is detected during the scan:
determining a platform type by mapping the at least one data marker of the at least one predetermined data marker type to the at least one platform type using the mapping data structure; and
assigning the at least one platform type as a determined platform type for the forensic image; and
where at least one data marker of the at least one predetermined data marker type is not detected during the scan:
examining at least a part of the forensic image for a set of predetermined data element types to identify a set of present data elements, the present data elements being of at least one of the set of predetermined data element types;
determining, according to at least one encoded rule stored in the memory, a most likely platform type using the set of present data elements identified during the examining; and
assigning the most likely platform type as the determined platform type for the forensic image.

2. The system of claim 1, wherein the processor is further configured to:
store in the memory a second mapping data structure including a mapping of the determined platform type to at least one forensic image processing tool; and
map the determined platform type to the at least one forensic image processing tool using the second mapping data structure.

3. The system of claim 2, wherein the at least one forensic image processing tool is configured to extract at least one data artifact type supported by the determined platform type from the forensic image.

4. The system of claim 2, wherein the processor is further configured to, in response to mapping the determined platform type to the at least one forensic image processing tool, automatically execute the at least one forensic image processing tool to process the forensic image.

5. The system of claim 1, wherein the at least one marker type includes a first marker type and a second marker type, and wherein the scanning for the second marker type is only executed if the first marker type is not detected by the scan for the first marker type.

6. The system of claim 1, wherein the processor is further configured to:
store in the memory a heuristic determination data structure including a mapping of at least one predetermined element type to at least one platform type; and
wherein the identified set of present elements comprises a first element and a second element; and
wherein the determining, according to the at least one encoded rule, comprises:
mapping the first element to a first platform type and the second element to a second platform type according to the heuristic determination data structure; and
selecting a determined platform from the first platform type and the second platform type based on the at least one encoded rule.

7. The system of claim 1, wherein the determining, according to the at least one encoded rule stored in the memory, the most likely platform type using the set of present data elements identified during the examining further comprises:
determining a candidate most likely platform type based on the set of present data elements;
determining a confidence level associated with the determination of the current platform type;
comparing the confidence level to a confidence level threshold; and
where the confidence level meets the confidence level threshold, assigning the candidate most likely platform as the most likely platform type and terminating the examining of the forensic image.

8. The system of claim 1, wherein the processor is further configured to:
store in the memory a mapping data structure including a mapping of the determined platform type to a digital forensic investigation workflow stored in the memory, the digital forensic investigation workflow including a plurality of operations to be performed by the processor on the forensic image or on data extracted from the forensic image;
map the determined platform type to the digital forensic investigation workflow; and
execute at least a portion of the digital forensic investigation workflow.

9. A computer-implemented method of determining a platform type of a forensic image, the method comprising:
storing, in a memory comprising at least one storage device, a mapping data structure including a mapping of at least one predetermined data marker type to at least one platform type;
automatically determining, using a processor, the platform type of the forensic image by:
scanning at least a part of the forensic image for the at least one predetermined data marker type;
where at least one data marker of the at least one predetermined data marker type is detected during the scan:
determining a platform type by mapping the at least one data marker of the at least one predetermined data marker type to the at least one platform type using the mapping data structure; and
assigning the at least one platform type as a determined platform type for the forensic image; and
where at least one data marker of the at least one predetermined data marker type is not detected during the scan:
examining at least a part of the forensic image for a set of predetermined data element types to identify a set of present data elements, the present data elements being of at least one of the set of predetermined data element types;
determining, according to at least one encoded rule stored in the memory, a most likely platform type using the set of present data elements identified during the examining; and
assigning the most likely platform type as the determined platform type for the forensic image.

10. The method of claim 9, further comprising:
storing in the memory a second mapping data structure including a mapping of the determined platform type to at least one forensic image processing tool; and
mapping the determined platform type to the at least one forensic image processing tool using the second mapping data structure.

11. The method of claim 10, further comprising, in response to mapping the determined platform type to the at least one forensic image processing tool, automatically executing the at least one forensic image processing tool to process the forensic image.

12. The method of claim 9, wherein the at least one marker type includes a first marker type and a second marker type, and wherein the scanning for the second marker type is only executed if the first marker type is not detected by the scan for the first marker type.

13. The method of claim 9, further comprising:
storing in the memory a heuristic determination data structure including a mapping of at least one predetermined element type to at least one platform type; and
wherein the identified set of present elements comprises a first element and a second element; and
wherein the determining, according to the at least one encoded rule, comprises:
mapping the first element to a first platform type and the second element to a second platform type according to the heuristic determination data structure; and
selecting a determined platform from the first platform type and the second platform type based on the at least one encoded rule.

14. The method of claim 9, wherein the determining, according to the at least one encoded rule stored in the memory, the most likely platform type using the set of present data elements identified during the examining further comprises:
determining a candidate most likely platform type based on the set of present data elements;
determining a confidence level associated with the determination of the current platform type;
comparing the confidence level to a confidence level threshold; and
where the confidence level meets the confidence level threshold, assigning the candidate most likely platform as the most likely platform type and terminating the examining of the forensic image.

15. The method of claim 9, further comprising:
storing in the memory a second mapping data structure including a mapping of the determined platform type to a digital forensic investigation workflow stored in the memory, the digital forensic investigation workflow including a plurality of operations to be performed by the processor on the forensic image or on data extracted from the forensic image;
mapping the determined platform type to the digital forensic investigation workflow; and
executing at least a portion of the digital forensic investigation workflow.
